# EUROPEAN PATENT APPLICATION

(11) **EP 1 085 430 A2**
(43) Date of publication of application: **21.03.2001**
(21) Application number: 00307530.6
(22) Date of filing: 01.09.2000
(51) Int. Cl.: G06F 17/30

(54) **Information retrieval and display**

(30) Priority: 20.09.1999 GB 9922211
(71) Applicant: NCR International, Inc., Dayton, Ohio 45479 (US)
(72) Inventor: Waller, Michael, London NW11 0DG (GB)
(74) Representative: Cleary, Fidelma

(57) **Abstract**

Apparatus for accessing a displayable information resource and tailoring retrieved information to a user's requirements comprises a tag reader (18), a decoder (34) for identifying a coded resource address (38) earned by a tag (28), and access means for accessing the identified resource. A display means (14, 22, 24, 48) displays information loaded from the accessed information resource. The disclosed embodiment employs printed RF tag technology, and the information resource is an Internet or intranet resource whose address (38) is a URL.

The disclosed apparatus is embodied in an item of furniture, more specifically a table (10). The tag reader (18) reads a tag (28) when a tagged item (26) is placed onto a support surface (14), and a display is presented by the support surface (14). The tagged item can, for example, be a product or its packaging, a ticket or token, or a letter or information sheet.

## Description

This invention relates to information retrieval and display, and contemplates techniques for locating and loading information from resources such as the Internet and displaying the same for review and/or interaction. More specifically, the invention embraces methods for retrieving information, together with display apparatus adapted for that purpose and especially for use in the domestic or commercial environment. The invention extends to methods and apparatus for interacting with the retrieved and displayed information.

The advance of information technology has placed information on almost any topic at the disposal of every suitably-equipped computer user. The Internet especially is undergoing explosive growth, with the result that new web pages and Internet-based services are proliferating in every field.

Web pages can simply contain reference information but increasingly provide interactive facilities for the provision of information, entertainment and Internet-based services. For instance, many banks now offer customers the option of on-line home banking over the Internet. Large stores offer home delivery services, where a customer places an order for specific goods such as groceries over the Internet and the ordered goods are subsequently delivered to the customer's home.

Whilst the expansion of the Internet has brought many benefits and has opened up some remarkable possibilities, it has also encountered the problem of information overload. There is now such a surfeit of information on many topics that irrelevant information obscures the information an Internet user needs to know. Filtering this information adds to what, for many actual and potential users, is the already undesirable complexity of Internet access.

For example, a query presented through an Internet search engine can lead to an overwhelming flood of irrelevant hits that discourages those seeking a quick answer to a simple question. Advanced search options can be used to stem the flood, but they involve input of further, carefully considered search parameters, and are still somewhat hit-and-miss. The user has no convenient way to ensure, as far as possible, that the information immediately displayed will be precisely relevant to his or her needs at that time. To be relevant, such information could be pertinent to the user's locality and/or the time of day, such as a bus or train timetable from the local bus stop or train station. More generally, relevant information could be the subject of whatever issue the user happens to be dealing with at that time, say a bank statement received in that day's mail, on which a query has arisen. Unfortunately, getting to such relevant information can be like finding a needle in a haystack. In particular, the global, borderless character of the Internet renders it ill-equipped readily to provide local information on demand.

Even if the URL of a desired web page is already known and has been bookmarked for easy repetitive access, much irrelevant information can be presented by that web page to the user. Means exist to personalise a web page to the user's perceived needs by, for example, storing a cookie on the user's PC that identifies the user and his or her browsing habits to the server hosting the web page. However, the user's actual information needs can change from day to day or even from hour to hour and so will tend to outstrip any such personalisation techniques.

As just one example, a user might visit a web site one day for advice on how to fill in a particularly complex form such as a tax return. A day or two later, the same user might visit that site again for advice on how to fill in another form such as an appendix to the first form. Clearly, it would be more of a hindrance than a help on that second visit if the browser infers from recent experience that the user only wants information relating to the first form. In practice, therefore, the user is presented with a full menu of options on each and every visit, through which the user has to navigate to get to the advice that be or she seeks.

Also, whilst Internet-enabled devices such as mobile telephones are threatening the hegemony of the PC in terms of Internet access, it is still the case for most users that Internet access requires access to a PC. Unless the PC is left on all the time and is connected to the Internet by a fast and expensive telecommunications link such as ISDN, Internet access requires the PC to be booted up, following which a dial-up connection to the user's ISP has to be made and only then can the desired web page be searched for or entered. Even then, there could be layers of menus to be negotiated, possibly exacerbated by security measures, each involving download time in what has come to be known as the 'world wide wait'. It is therefore quite common for several minutes to elapse before the PC is actually ready to help the user with his or her query. This delay further discourages the user from accessing the Internet resources from which he or she could benefit and, if the information requested is time-critical such as a bus or train timetable, can make the system too slow to be of practical use.

More fundamentally, many potential Internet users do not have access to a PC within their domestic environment or are reluctant to use the Internet because of lack of familiarity with the use of computers. PCs are designed primarily as a functional tool for the workplace, and not for household use. They therefore impose the creation of an office environment in the home, and cannot properly handle challenging domestic environments such as the kitchen with its heat, humidity and dirt contamination. Indeed, a PC in the kitchen would generally be regarded as getting in the way, no matter how useful its functionality might be in downloading recipes and so on.

Accordingly, even in households where Internet users have access to a PC, the PC is rarely located in the most convenient domestic environment for use in performing routine domestic activities such as on-line shopping etc. PCs are often located in private spaces within the home, such as a home office or a bedroom, rather than in more public spaces. This environment of use influences who in the household has access to the computer; studies show that, on average, usage still remains male-dominated rather than a shared family activity.

In recent years, the diffusion of home computers has slowed throughout the western world. By way of illustration, on-line PC household penetration in the US has slowed down at around 40%, despite very healthy predictions for home on-line access and ever-falling PC prices. It appears that the PC 'one size fits all' approach to computing does not satisfy the requirements of most consumers, whose lifestyle needs may be better met by alternatives offering ease of use that PCs fail to provide. There is therefore a need to satisfy the home computing needs of the many consumers who do not personally perceive the need for a home PC, or who are dissuaded by its complexity, inconvenience and cost. This need extends to the commercial environment, such in as offices and stores.

The Applicant's studies with discussion groups in the area of so-called relationship technologies have led to many interesting findings. Whilst most participants in such studies have experience of using computers at work, the studies noted a general feeling of uneasiness towards technology. The PC is often seen as being too complicated for most of the computing tasks that users want to perform at home or at work. Even for routine household tasks, the PC is seen as being cumbersome, slow to boot and in the 'wrong' room within the home, a room that is not used frequently. Also, there appears to be a lack of trust in PCs and their reliability. Most participants felt that technology would let them down since, from their experience of PCs at work, computers often 'crashed' or simply did not work properly.

Accordingly, easier to use computing devices have been proposed to drive the next generation of computing within the home and indeed elsewhere. The abovementioned Internet-enabled devices such as mobile telephones aim to simplify Internet access by providing a simple alternative to a PC but still suffer from problems. For example, Internet access is just one of several functions that such devices offer and so a succession of control inputs are necessary to select and to effect Internet access from among the various functions. Of course, once connected to the Internet, the potential problem of information overload remains, no matter how simple and intuitive the operation of the browser apparatus itself might be.

Of course, it helps if the browser software and the device that runs it is indeed simple and intuitive to use. However, for the reasons set out above, neither PCs nor any other known Internet-enabled devices fully meet those requirements. Many laborious steps can lie between reading, say, a URL in a manufacturer's product brochure and successfully obtaining relevant information from the web site thus identified. Transcription errors often occur, or the URL could have changed since the brochure was printed.

Even when the right information has been accessed, the layout of a typical PC or other Internet-enabled device does not lend itself to the most efficient use of that information. It is difficult to share displayed information among two or more users unless they sit beside each other in front of the monitor or other display. Indeed, where two persons sit opposite each other around a desk with a PC monitor on it, as is more typical in a commercial environment such as at an adviser's desk in a bank or a store, the monitor serves to divide rather than to unify. It is similarly difficult for more than one user to interact with the displayed information.

Against this background and in accordance with this invention, the Inventors have had the insight that the address of an information resource, notably a web address, can be coded onto a machine-readable tag associated with an item to which that information resource relates. The tag can be read automatically to identify and then access the information resource, thereby to extract and display truly relevant information but without putting the user to the trouble of searching for the information resource. For example, as soon as a coded web address is read from a tag by a suitable reader connected to a serial port of a PC or otherwise associated with a browsing apparatus, a browser can be launched to load and display a web page containing information relevant to the item associated with the tag. An application address optionally stored on the tag with the web address may be used to launch the browser application if desired.

The item might represent a product or service, being a product itself or its packaging, a ticket or a receipt, or other general merchandising material such as a brochure, an information sheet or an advertising leaflet More generally, the item can be printed material of any type, such as a form.

The invention therefore provides a link between items representing products or services, and their related web content. For example, a URL coded on a product or its packaging can access a customer support web site for that product, at which assembly or set-up instructions are available and warranty registration details can be provided. A URL coded on printed material such as a form can access a web adviser that explains how to fill in that form. URLs coded on receipts and tickets can show service details, such as store opening times, timetables, event details or indeed any other information relating to the issuer of the receipt or ticket or the subject or contents of that receipt or ticket.

Whilst the invention provides great benefit in the Internet environment, it is not essential that the information resource is an Internet resource: information could be held on an intranet or in a database of any description.

In devising the physical form of the apparatus used to read a tag, launch a browser and display the information thus extracted, the Inventors have considered the abovementioned drawbacks of the PC and its more recent Internet-enabled competitors. The Inventors have concluded that the apparatus of the invention, at least the tag-reading part and preferably the entire apparatus including display and input means, can best be embodied in the form of a multi-purpose item of furniture. That way, the apparatus becomes an integrated part of the living or working environment, and has its normal furniture use in addition to its information-retrieving functionality. Consequently, the apparatus is never perceived as being in the way, and becomes an accepted and indeed indispensable part of daily life.

Most preferably, the item of furniture is a table, which term will be taken, for the purposes of this specification, to encompass other functionally-similar items of furniture such as counters and desks. Tables as defined herein are characterised by a support surface of some kind, which surface is usually generally horizontal. This presents the elegant and highly advantageous possibility of reading the tag on an item when that item is simply placed upon the support surface of the table. This is a remarkably natural, intuitive and convenient way of operating the reader to launch a browser and thereby load the web page appropriate to the item placed on the table.

More preferably still, not only is the item itself displayed on the table when launching the browser, but the retrieved information relevant to that item is also displayed on the table. In the currently preferred embodiment that will be described later, an internal projector projects the display image up onto the underside of the support surface, to be viewed by a user looking down from above and beside the support surface

Interaction with the displayed information is another preferred part of the invention. A touch screen overlay on the support surface is currently envisaged, enabling icons or a virtual keypad to be pressed as necessary to interact with the display.

The inventive concept can therefore be expressed in various ways. From one aspect, the invention resides in an item for which a related displayable information resource exists, the item having a machine-readable tag onto which the address of the information resource is coded for access to the information resource upon machine-reading the address. This aspect of the invention also embraces a coded machine-readable tag for attachment to or incorporation into an item relating to a displayable information resource whose address is coded onto the tag, and a method of coding such a tag comprising coding an address of a displayable information resource onto the tag.

The invention extends to apparatus for accessing a displayable information resource, the apparatus comprising a tag reader, a decoder for identifying a coded information resource address earned by the tag, and access means for accessing the identified information resource. The apparatus preferably further comprises display means for displaying information loaded from the accessed information resource, the display means advantageously being associated with control input means such as a touch screen overlay.

Whilst any or all of the above components of the apparatus could be distributed around a plurality of interconnected units, it is much preferred that all of those components are integrated in a single appliance that, more preferably, is embodied in an item of furniture such as a table. In any event, the tag reader is preferably operable to read a tag when the item is placed onto a support surface of the apparatus. The tag reader may be a reader/writer to allow data to be written to the tag.

The invention also embraces the related method of accessing a displayable information resource that relates to an item, comprising reading a tag carried by the item, identifying an information resource address earned by the tag, and accessing the identified information resource. The method will generally further comprise displaying information relating to the item loaded from the accessed information resource, although the nature of that display is not essential within the broad inventive concept. In method terms, the operation of reading the tag preferably takes place upon placing the item onto a support surface, and the further operations of the method follow on automatically from that initial operation so that those further operations, too, are ultimately triggered by placing the item onto the support surface. An element of manual control is, of course, possible if desired, such as manually enabling any of the operations of the method.

The invention can also be expressed in terms of a method of tailoring retrieved information to a user's requirements, comprising the user gathering items that relate to the user's potential information needs, each item having a machine-readable tag onto which the address of a displayable information resource is coded, and accessing the information resource by machine-reading the address on the tag.

In the invention, a tag is seen as a discrete component that can be applied to or incorporated into an item, the tag thus having a distinct character from the item to which it is applied. For example, a tag code programmed into a memory storage device such as a CD-ROM would not be regarded as having a distinct character from that item, although like any product, a physical tag could be applied to such an item to obtain the benefits of the invention.

In its broadest sense, the invention contemplates a wide range of machine-readable, encoded tags that can be applied to or incorporated into an item. It would be possible, for example, to employ bar code technology. There is no cheaper machine-readable tag. However, bar codes suffer problems in integrity of read operations due to optical difficulties, particularly the need for line-of-sight presentation within a limited range of orientations with respect to the reader. More generally, bar code systems are prone to dirt build-up, ink bleeding, stray marks, dropouts and warping or tearing of the label or other substrate to which the bar code is applied. Bar coded information cannot be erased, rewritten or appended unless one replaces the bar code entirely, and bar codes can so easily be copied as to present no real barrier to counterfeit use or a security breach.

For these reasons, the Inventors envisage particular advantages for silicon-based ID tag technology, specifically RF tags (RFID) that solve or at least mitigate all of the above problems of bar codes. In RFID applications, a reader (which can be a reader/writer) generates an excitation field that serves as both the tag's source of power and its master clock. Thus activated when in range of the reader, the tag cyclically modulates its data contents and transmits them to a receiver circuit within the reader. The reader demodulates and decodes the data signal and provides a formatted data packet for further processing by a host computer.

Wireless programming is a particularly advantageous option offered by RFID read/write systems. It enables the memory in a tag to be configured, updated, erased, rewritten or appended by a suitable RF reader/writer at any time in the life of the tag or of the item with which the tag is associated. So, a tag can be programmed just before the associated item is given to the user, thus ensuring that the information it contains is up to date and appropriate to the user's needs at that time.

Whilst cross-platform RFID standards have not yet been developed, the Inventors especially favour RFID tags that embody the BiStatix technology announced by Motorola, Inc. in March 1999 through its subsidiary, Indala Corporation. The names BiStatix, Motorola and Indala are all acknowledged as trade marks.

Full particulars of BiStatix technology are available at Indala's web site whose home page is currently at *http://129.188.106.11/LMPS/Indala/index.html.* Briefly, BiStatix works on a capacitive coupling principle as opposed to the inductive principle of normal RFID systems. A BiStatix tag simply comprises a small, thin silicon chip, less than 3 mm² in surface area and less than 250 microns thick, attached to printed electrodes of, for example, carbon ink that serve as antennae for wireless communication between the chip and a suitable reader.

The chip and the electrodes are disposed on a substrate that can be flexible, for example on the reverse of a paper label whose opposite, exposed face can bear human-readable information, preferably in natural language, and possibly also bar-coded information for compatibility with an existing tag system. In this form, the BiStatix tag is flat and very thin, almost undetectably so. It is easy and cheap to make, and simple to apply to an item or to integrate with an existing item. This applies especially to an existing printed item like a form, ticket, token or information sheet because the BiStatix printing technique can simply be integrated with the existing printing process. The tag is tolerant of flexing, creasing and folding and is generally robust, even if the electrodes are torn or otherwise damaged: so long as an effective remnant of the electrodes remains attached to the silicon chip and the chip itself remains intact, the tag will remain functional.

Of course, it is also possible to apply the components of a BiStatix tag to a relatively stiff substrate such as a laminated ID card.

Whilst it is accepted that no silicon-based technology can compare strictly cost-wise with a bar code, a BiStatix tag comes close enough to a bar code in terms of cost that its technical benefits outweigh the additional cost while allowing use of the tags in high-volume, disposable applications. The BiStatix tag may therefore be considered as a next-generation bar code. Importantly for the purposes of the invention, BiStatix technology promises to provide sufficient memory capacity to store most if not all typical URLs. Present BiStatix tags are programmable with up to 120 ASCII characters, and greater capacity can be expected in future developments.

Accordingly, in conceptual terms, it is preferred that the tag technology used in the invention is RF and more preferably involves the use of a printed tag such as is proposed by Motorola/Indala under the trade mark BiStatix.

In order that this invention can be more readily understood, reference will now be made, by way of example, to the accompanying drawings in which:
Figure 1 is a schematic perspective view of a prototype embodiment of the invention in the guise of a kitchen table;
Figure 2 is a block diagram showing the operation of the embodiment of Figure 1 in reading a tag, launching a browser and displaying information pertinent to the tag;
Figures 3(a) to 3(f) constitute a story board that illustrates a bus trip scenario employing the invention;
Figures 4(a) to 4(e) constitute a story board that illustrates a cinema trip scenario employing the invention;
Figures 5(a) to 5(e) constitute a story board that illustrates a cooking/shopping scenario employing the invention;
Figures 6(a) to 6(e) constitute a story board that illustrates a selling scenario employing the invention;
Figures 7(a) to 7(c) constitute a story board that illustrates a banking scenario employing the invention; and
Figures 8(a) to 8(f) constitute a story board that illustrates a domestic learning/play scenario employing the invention.

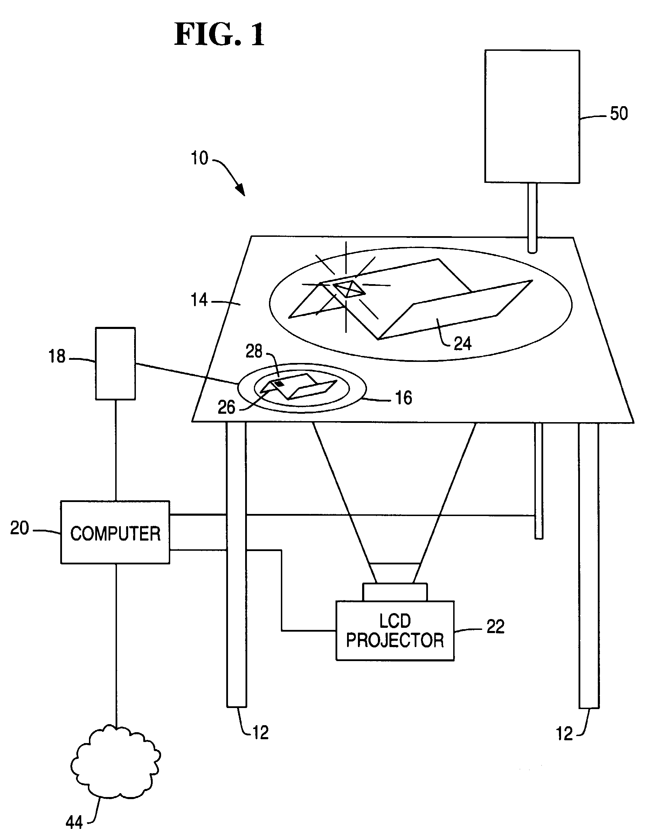

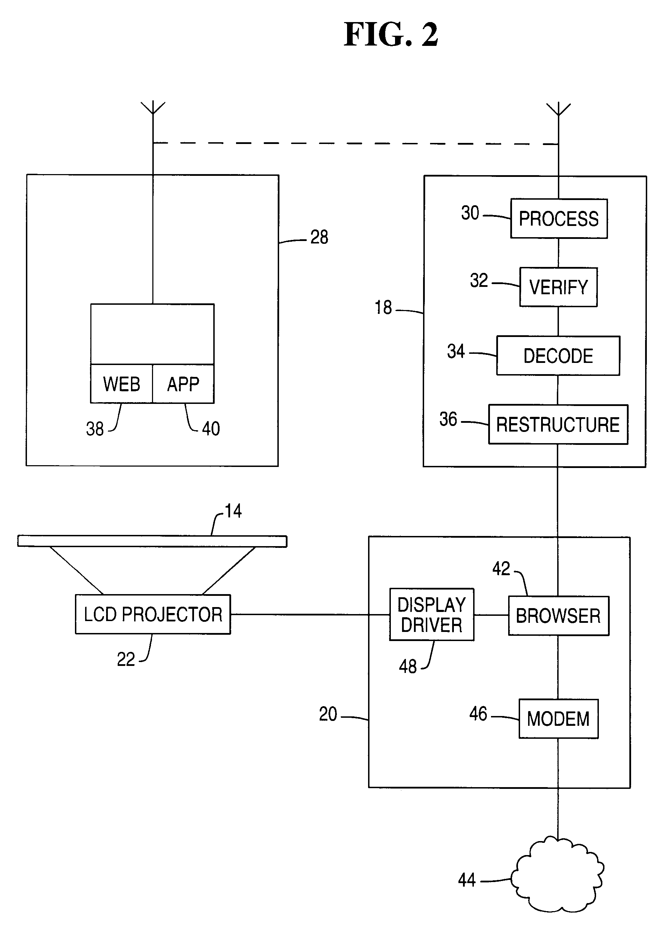

Referring firstly to Figures 1 and 2 of the drawings, tag-reader apparatus in accordance with the invention is embodied in the form of a table 10 suitable for use in a kitchen environment. The table 10 has legs 12 supporting an oblong glass top 14. The glass top 14 presents a scratch-resistant wipe-clean upper supporting surface capable of surviving the trials of kitchen life.

Situated in a protected position offset to one corner under the glass top 14 of the table 10, an excitation coil 16 of a tag reader 18 provides outputs to a PC 20. As aforementioned, the tag reader 18 could be a reader/writer, in which case the reader 18 will also take inputs from the PC 20. The PC 20, in turn, drives an LCD projector 22 arranged to project a display image 24 upwardly onto the underside of the glass top 14, to be viewed from above by a user standing or sitting to one side of the table 10. The display image 24 occupies a portion of the table top 14 not occupied by the excitation coil 16, so that neither the coil 16 nor a tagged item 26 placed upon it need obscure the display image 24.

The PC 20 is described as such for simplicity because it includes the essential PC elements such as a CPU, memory and I/O means (not shown), even though the external layout of a typical PC would not, in general, be adopted in a production apparatus.

When the tag reader 18 is on, as is envisaged will be the normal state of the table 10, the excitation coil 16 generates an excitation field extending over at least part of the upper surface of the table 10. A BiStatix tag 28 that is placed upon that part of the table 10 with its associated item 26 (in this case a printed sheet such as a letter) comes within that excitation field and so its chip is powered up and activated to identify itself to the reader 18 via the printed electrodes that constitute tag antennae.

An antenna associated with the tag reader and/or the excitation coil 16 receives the electromagnetic emissions from the tag antennae and converts them back into electrical form for detection and processing by receiving circuitry within the reader 18. Specific reference is made to Figure 2 at this point. Once the tag data has been processed at 30, the reader 18 firstly checks to verify at 32 that the signal received is valid and if it is valid, the data in the received signal is decoded at 34 and restructured at 36 into a format suitable for input to the PC 20. The data could, for example, be input through a serial port of the PC 20.

In this preferred embodiment, the identification data stored in tag 28 includes a web address 38 and an application address 40 so that, upon receiving the restructured data from the reader 18, the PC 20 launches a browser application 42 appropriate to the application address 40 and instructs that browser 42 to locate and load from the Internet 44 via a modem 46 a web page appropriate to the specified web address. Once the web page is loaded, a display driver 48 implemented within the PC 20 causes the LCD projector 22 to project the web page up onto the underside of the glass top 14, to be viewed by a user and optionally interacted with by means of e.g. a touch screen overlay (not shown) or other sensors.

The excitation field generated by the excitation coil 16 extends over the upper surface of the table 10 at least within the perimeter of the coil 16. Possibly, however, depending upon the configuration and power of the coil 16 and the tag reader 18, the effective range of the excitation field will extend to the immediate environs of the table 10, so that merely bringing a tag-equipped item near to the table 10 will activate the projected display 24 as desired.

An auxiliary LCD display screen 50 also driven by the PC 20 stands above the table top 14 to show the state or mode of the table 10. A touch-screen control interface could be incorporated into this display 50 if desired.

It is emphasised that the table 10 illustrated in Figure 1 is a prototype configuration and that, in practice, the tag reader 18, PC 20 and LCD projector 22 would probably be housed in a hollow cabinet disposed under the glass top 14, the top being sealed to the cabinet to the extent necessary to prevent undue ingress of the moisture and other contaminants common in a kitchen environment. Beneficially in that case, the top 14 would overlap the edges of the cabinet so that spillages spilling over the edge of the top 14 will tend to fall onto the floor rather than run into the cabinet, where they could cause damage to the components within. The auxiliary display 50 could beneficially be integrated with the projected display 24.

A series of story boards now follows to illustrate some of the many novel possibilities offered by the invention.

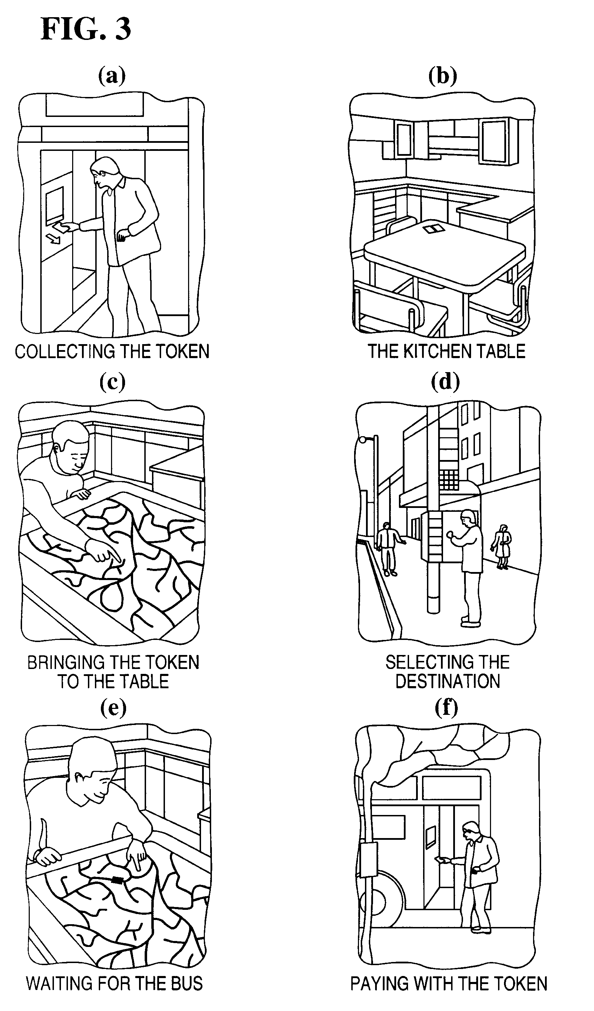

The first story board is illustrated in Figures 3(a) to 3(f). In Figure 3(a), a user collects a token upon alighting from a bus. The token holds a tag encoding a web address, and could equally well be a ticket given to the user upon boarding the bus. Once the user gets home with the token, the table is initially inactive or dormant as shown in Figure 3(b), simply serving its function as furniture, but once the user brings the token to the table as shown in Figure 3(c), the table reads the tag and automatically comes to life, linking to the appropriate web site and downloading appropriate instructions for display.

To enable adequately fast response upon activation, it is preferred that the table has a standby mode in which the display is off or in a screensaver mode but the PC is fully operational. It is further preferred that the table is connected to the user's ISP by a fast, essentially 'always on' connection such as is allowed by an ISDN or optical cable telecommunications infrastructure. However, even if such a connection is not available, the invention will bring benefits by accessing relevant information immediately upon dialling in to the user's ISP.

In this instance, by use of the global positioning system (GPS) or a network of roadside transponders, the bus company knows the location of each and every working bus in its fleet. Accordingly, the selected web site linked to the bus company's location system can present a live, real-time street map of the buses and their positions. The table therefore gives the location of the bus company's routes, and the buses on those routes, in relation to the user's home. This is the entry point to the map, from which the user can zoom out to select any destination by interacting with the touch screen display. This is all in contrast to the existing situation in which the user would have to visit a bus stop to look up the inevitably less accurate timetable displayed there, as shown in Figure 3(d).

When the appropriate destination has been selected, control inputs can be made via the touch screen to make an appropriate fare payment transaction. Confirmation of the transaction can be written to the tag held by the token. It is then just a matter of waiting as shown in Figure 3(e) for the desired bus to approach the user's home, whereupon the user can set off just in time to meet the bus at the nearest bus stop. The token with confirmation of payment can then be read upon boarding the bus, as shown in Figure 3(f). The payment credited to the token could alternatively be credited to a personal digital assistant (PDA) or an electronic wallet, which can similarly be read upon boarding to confirm pre-payment for the journey.

The tag held by the token preferably identifies the bus route of interest to the user and so, if the user wishes, enables the web site to present only information of relevance to that route. This is an indication of how the already user-specific information presented by the invention may be personalised further to suit the user's needs.

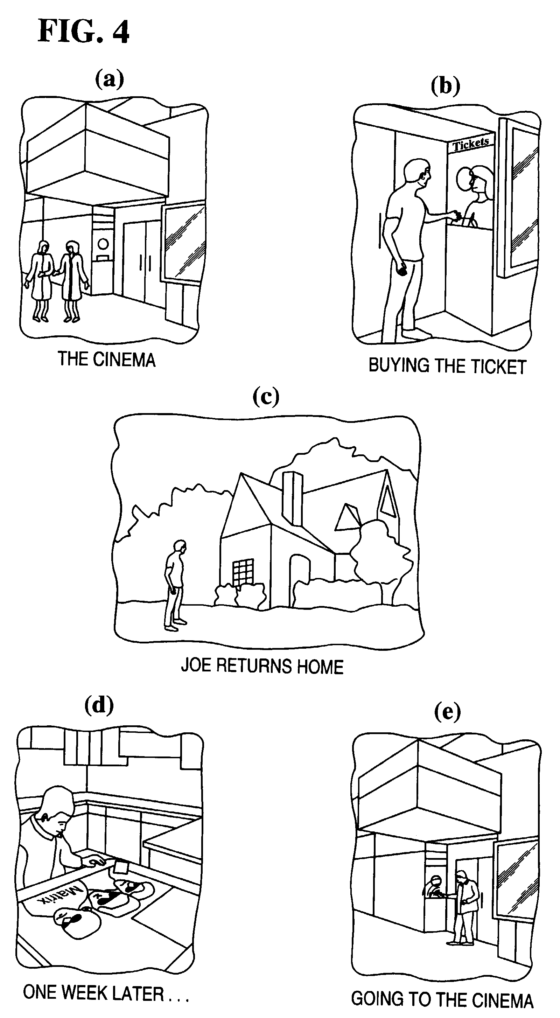

Moving on now to Figures 4(a) to 4(e), the tag in this instance is held by a cinema ticket issued by a cinema that the user visits and returns home from as shown in Figures 4(a) to 4(c). The user keeps the ticket until, a week later as shown in Figure 4(d), the user places the ticket on the table. The table is thereby caused to load and display the cinema's web site, where the user can read reviews, order tickets and pick seats for showings of the latest film releases. In conventional fashion, the web site may include links to other related sites, through which the user can 'surf' at his leisure.

As with the bus ticket of the first story board shown in Figure 3, the user can use the table to pre-pay for his next visit to the cinema shown in Figure 4(e), re-using the ticket with its tag memory suitably amended or using a PDA or electronic wallet instead to store and upload the payment and any related seat reservation upon arriving at the cinema.

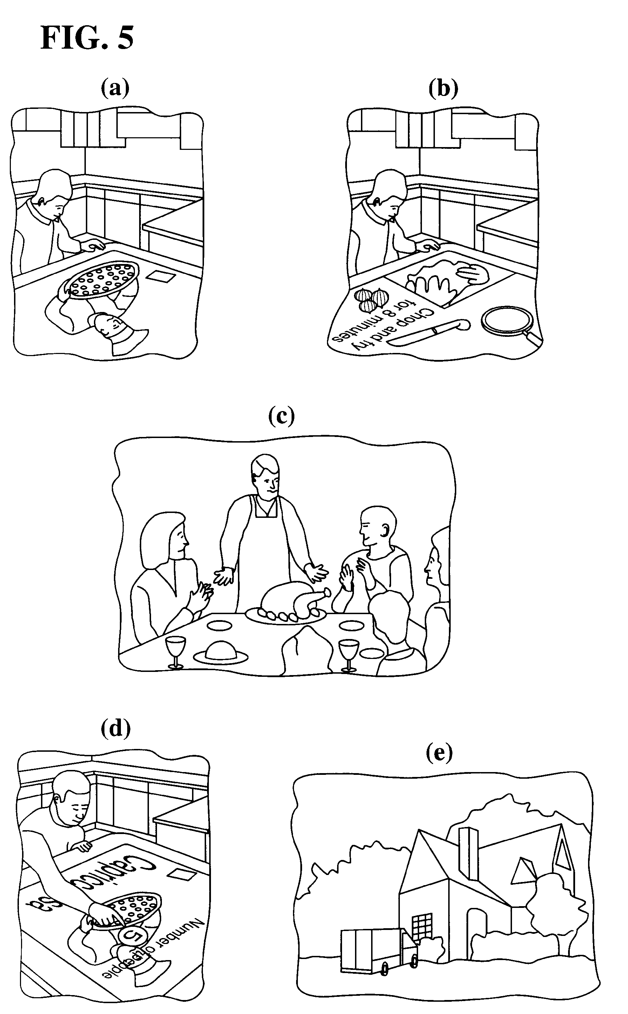

Figures 5(a) to 5(e) illustrate how the invention fits in to a cooking/shopping scenario, and contemplate that the user has decided to cook a meal at home for some friends, for example upon visiting a store to witness a demonstration by a chef. During this visit, the user obtained a recipe token from the store, used it to order the ingredients necessary for the proposed meal, and took the token home with the ingredients.

The token carries a tag for identifying an information resource that will guide the user when cooking the meal. So, in Figure 5(a), the recipe token has been placed onto the table to launch a browser that accesses an animated web site at which a chef takes the user step-by-step through the recipe as shown in Figure 5(b), the user interacting with the display as necessary to produce the meal as shown in Figure 5(c).

So good was the meal that a week or two later, the user wants to make a similar meal for other friends. However, the user does not have time to visit the store to get the ingredients and so wants to ask for home delivery from the store. The user interacts with the display by selecting the recipe, either by placing the recipe token, if retained, onto the table top or by recalling the recipe from memory within the table or on a web resource. Then, the user simply specifies the number of people he needs to feed as shown in Figure 5(d) and the approximate time he wants the delivery to arrive. This information is transmitted back across the Internet or via e-mail to the store, whereupon a delivery van comes from the store at the appointed hour as shown in Figure 5(e).

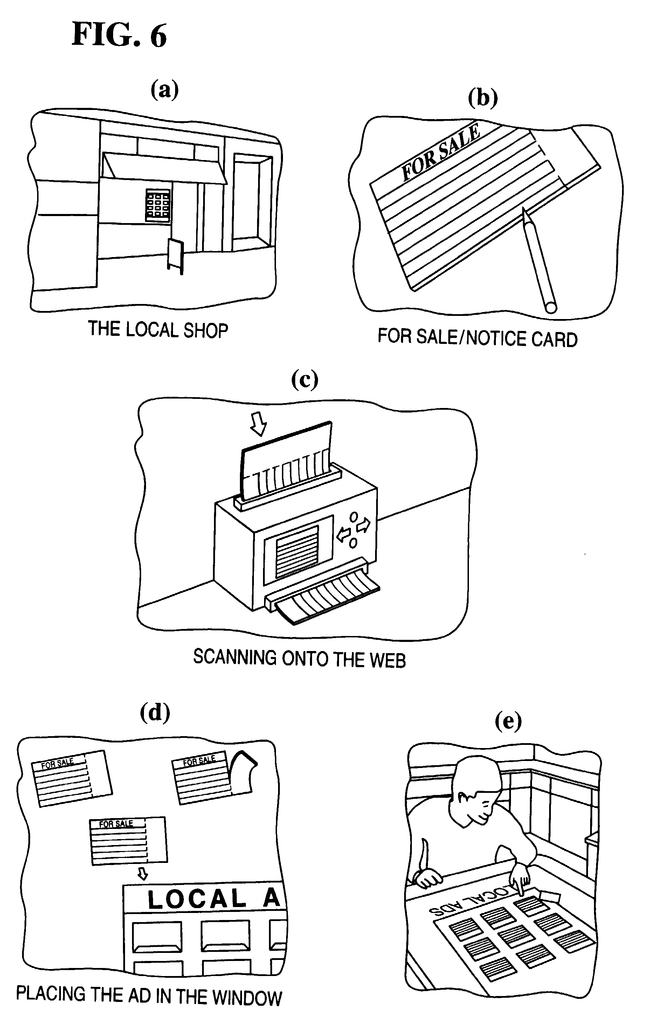

Turning now to Figures 6(a) to 6(e), the user wishes to sell his bicycle and decides to do so by visiting his local store (Figure 6(a)) and placing an advertisement card in a notice board in the front window of the store. The advertisement card (Figure 6(b)) has two main parts. The user writes on one part to fill in particulars of the bicycle and the price at which it is offered. This part is displayed in the store window notice board. The other part is a tear-off section holding a tag that identifies a web address corresponding to the notice board. The user takes this tear-off section home for use with the table. There could be other removable parts associated with the first part, such as a tag address section to be taken by people who visit the store and see the advert.

Not only is the first part of the advertisement card displayed in the notice board, but before being placed there, its contents are scanned in by a scanner as shown in Figure 6(c) that makes a digital copy of the card and places that copy into the notice board web site. Optionally, the shopkeeper selects how long the card should remain on display on the notice board and, in virtual form, on the corresponding web site, so that a reminder can be generated to remove the card from the notice board at the appropriate time.

Once scanned in this way, the parts of the advertisement card are separated as shown in Figure 6(d). The first part of the card is placed into the notice board and the second part is handed to the user who takes it home as aforesaid. When the user wants to view the notice board web site to check that the advert is correctly placed and to see if any buyers are interested, it is simply a matter of placing the second part of the advertisement card onto the table as shown in Figure 6(e), whereupon the appropriate web site is loaded and displayed for review and interaction.

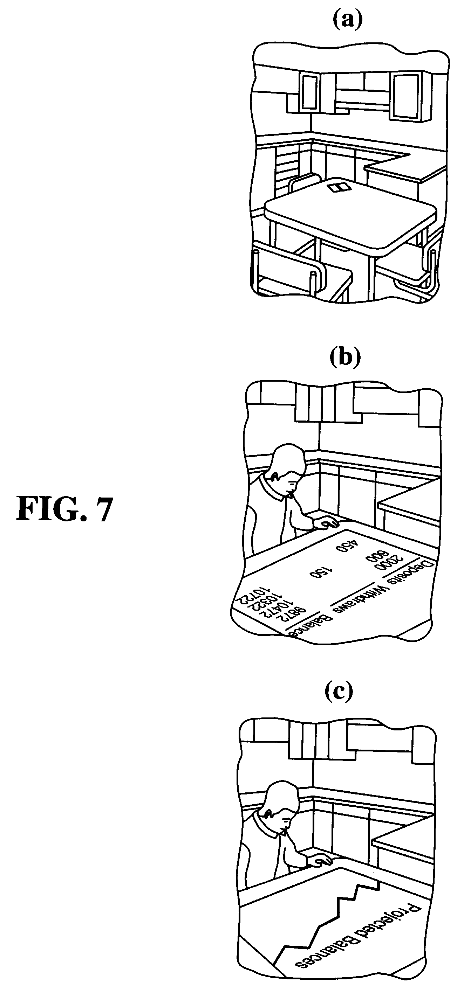

Figures 7(a) to 7(c) illustrate a banking scenario in which the user receives a mailed bank statement, either automatically or upon specific request. The bank statement has a tag that launches an online banking service when the statement is placed upon the previously-dormant table as shown in Figure 7(a). This service shows an interactive visualisation of the user's recent and projected banking and savings transactions as shown in Figures 7(b) and 7(c), giving the user a better understanding of his finances and a new level of control over them.

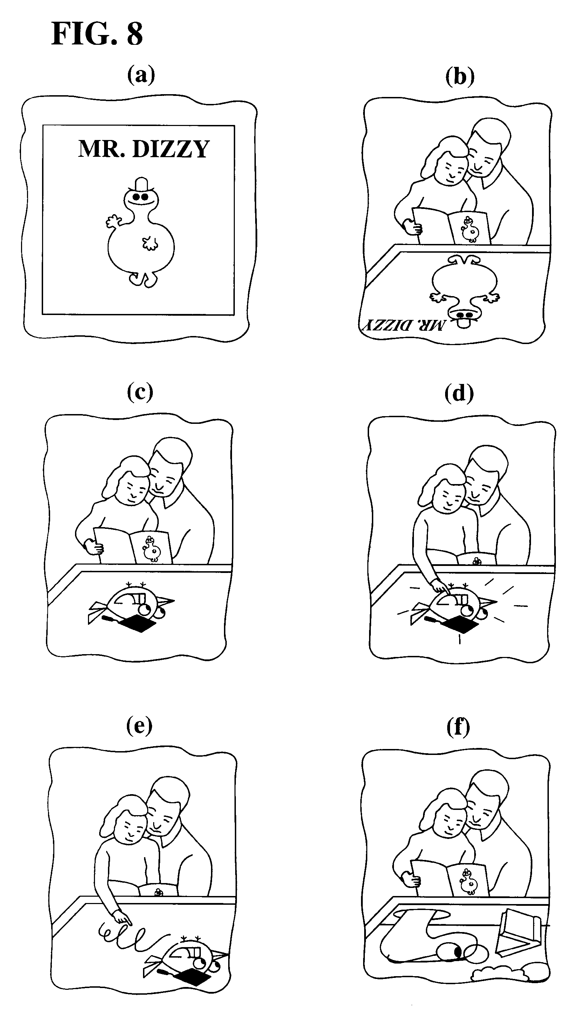

Finally, Figures 8(a) to 8(f) illustrate an interactive learning/play scenario. In this scenario, a children's book (Figure 8(a)), whose trade marks are acknowledged, is tagged so that when the book is brought to the table and placed upon it or even near it as shown in Figure 8(b), an Internet address and application are read and acted upon to access and display an animated web site relating to that book and its characters. The animated characters develop with time and as the child progresses through the book, as shown in Figure 8(c), and the characters preferably respond to interaction such as touching the appropriate part of the display whereupon the appropriate character responds by moving. For example, the bird of Figure 8(c) is touched in Figure 8(d) and seemingly flies around the display as shown in Figure 8(e). A new interactive animation preferably appears for each new page of the book, as shown in Figure 8(f).

It will be apparent that the information presented on the table both supports and reinforces the narrative of the book, greatly improving the learning and play experience for child and adult alike.

The story boards above outline day-to-day experiences of an ordinary life, and illustrate how subtly and yet profoundly the invention can affect such a life. The technology gradually becomes invisible to the user but its effect continues to grow. With time, the user collects many different types of tags that are relevant to his or her lifestyle and personality. The intelligent system responds accordingly, tailoring itself to reflect the information that is relevant to the user's life. This process happens without conscious tailoring input from the user, who by simply using the invention and enjoying its benefits, invests the necessary input without realising it.

Many variations are possible without departing from the inventive concepts. For example, the invention lends itself to marketing by mailing tagged letters or brochures to potential buyers of a product or service, who can then learn more about the proposed purchase simply by bringing the tagged item into range of a table-mounted tag reader and viewing the resulting display. Optional interaction with the display can be employed to effect the purchase if desired. Accordingly, reference should be made to the accompanying claims rather than the foregoing specific description in interpreting the scope of the invention.

## Claims

1. Apparatus (10) for accessing a displayable information resource, the apparatus (10) comprising a tag reader (18), a decoder (34) for identifying a coded information resource address (38) carried by a tag (28), and access means for accessing the identified information resource.

2. The apparatus of Claim 1, further comprising display means (14, 22, 24, 48) for displaying information loaded from the accessed information resource.

3. The apparatus of Claim 1, wherein the display means (14, 22, 24, 48) is associated with control input means.

4. The apparatus of Claim 3, wherein the control input means is a touch screen overlay.

5. The apparatus of any preceding Claim, embodied in an item of furniture (10).

6. The apparatus of Claim 5, embodied in the form of a table (10).

7. The apparatus of any preceding Claim, wherein the tag reader (18) is operable to read a tag (28) when a tagged item (26) is placed onto a support surface (14) of the apparatus (10).

8. The apparatus of Claim 7, wherein an excitation means (16) of the tag reader (18) is disposed under the support surface (14).

9. The apparatus of Claim 7 or Claim 8 when dependant directly or indirectly upon Claim 2, wherein a display is presented by the support surface (14).

10. The apparatus of Claim 9, wherein the display is generated under the support surface (14).

11. The apparatus of Claim 10, and including projector means (22) arranged to project the display upwardly from under the support surface (14).

12. The apparatus of any of Claims 7 to 12 when dependant directly or indirectly upon Claim 2, wherein the support surface (14) has a reader portion on which a tagged item can be placed to read its tag, and a display portion on which the display can be presented.

13. The apparatus of Claim 12, wherein the support surface (14) is continuous between the reader portion and the display portion.

14. The apparatus of any preceding Claim, wherein the tag reader (18) is a reader/writer capable of writing data to the tag (28).

15. The apparatus of any preceding Claim, all of whose recited components are integrated in a single appliance (10).

16. A method of accessing a displayable information resource that relates to an item (26), comprising reading a tag (28) carried by the item (26), identifying an information resource address carried by the tag (34), and accessing the identified information resource (42).

17. The method of Claim 16, further comprising displaying information relating to the item (26) loaded from the accessed information resource.

18. The method of Claim 16 or Claim 17, wherein the operation of reading the tag (28) takes place upon placing the item (26) onto a support surface (14).

19. The method of Claim 18, wherein the subsequent operations of the method follow on automatically from the operation of reading the tag (28).

20. The method of Claim 18 or Claim 19 when appendant to Claim 16, comprising displaying the information on or beside the support surface (14).

21. A method of tailoring retrieved information to a user's requirements, comprising the user gathering items (26) that relate to the user's potential information needs, each item (26) having a machine-readable tag (28) onto which the address of a displayable information resource is coded, and accessing the information resource by machine-reading the address on the tag (28).

22. An item for which a related displayable information resource exists, the item having a machine-readable tag onto which an address of the information resource is coded for access to the information resource upon machine-reading the address.

23. A coded machine-readable tag adapted for attachment to or incorporation into an item relating to a displayable information resource whose address is coded onto the tag.

24. A method of coding a machine-readable tag, comprising coding an address of a displayable information resource onto the tag.

25. The apparatus, method, item or tag of any preceding Claim, wherein the information resource is an Internet or intranet resource and the coded address (38) is a URL for that resource.

26. The apparatus, method, item or tag of Claim 25, wherein the coded address (38) is accompanied by an application address (40).

27. The apparatus, method, item or tag of any preceding Claim, and employing RF tag technology.

28. The apparatus, method, item or tag of Claim 27, wherein the tag (28) is a printed tag.

29. The apparatus, method, item or tag of Claim 28, wherein the tag (28) is a BiStatix (trade mark) tag.
